(19) Europäisches Patentamt
European Patent Office
Office européen des brevets

(11) EP 0 846 194 B1

(12) # EUROPÄISCHE PATENTSCHRIFT

(45) Veröffentlichungstag und Bekanntmachung des Hinweises auf die Patenterteilung:
**07.07.1999 Patentblatt 1999/27**

(21) Anmeldenummer: **96929257.2**

(22) Anmeldetag: **14.08.1996**

(51) Int Cl.$^{6}$: **C25B 1/28**

(86) Internationale Anmeldenummer:
**PCT/EP96/03596**

(87) Internationale Veröffentlichungsnummer:
**WO 97/07262 (27.02.1997 Gazette 1997/10)**

(54) **VERFAHREN ZUR KOMBINIERTEN ELEKTROCHEMISCHEN HERSTELLUNG VON NATRIUMPEROXODISULFAT UND NATRONLAUGE**

PROCESS FOR THE COMBINED ELECTROCHEMICAL PRODUCTION OF SODIUM PEROXIDE DISULPHATE AND SODA LYE

PROCEDE PERMETTANT UNE PRODUCTION ELECTROCHIMIQUE COMBINEE DE BISULFATE DE PEROXYDE DE SODIUM ET DE SOUDE CAUSTIQUE

(84) Benannte Vertragsstaaten:
**AT BE CH DE DK ES FI FR GB GR IE IT LI NL PT SE**

(30) Priorität: **17.08.1995 DE 19530218**
**20.07.1996 DE 19629381**

(43) Veröffentlichungstag der Anmeldung:
**10.06.1998 Patentblatt 1998/24**

(73) Patentinhaber: **EILENBURGER ELEKTROLYSE- UND UMWELTTECHNIK GMBH**
**D-04838 Eilenburg (DE)**

(72) Erfinder:
- **THIELE, Wolfgang**
**04838 Eilenburg (DE)**
- **WILDNER, Knut**
**04838 Eilenburg (DE)**

(74) Vertreter: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm,**
**Kopernikusstrasse 9**
**81679 München (DE)**

(56) Entgegenhaltungen:
**DE-A- 4 326 539** **FR-A- 2 375 344**
**LU-A- 66 997**

EP 0 846 194 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Natriumperoxodisulfat findet als Polymerisationsinitiator, als Ätz- und Beizmittel sowie als Oxidations- und Bleichmittel in der chemischen, metallverarbeitenden und elektronischen Industrie vielfältige Anwendung. In zunehmendem Maße wird es auch in der Umwelttechnologie eingesetzt, da es infolge seines hohen Oxidationspotentials viele anorganische und organische Schadstoffe oxidativ abzubauen vermag und infolge seiner Fähigkeit, Metalle aufzulösen, auch zur Extraktion und Rückgewinnung von Metallen aus Reststoffen (z.B. Elektronikschrott) oder aus Abgasen (z.B. Quecksilber) genutzt werden kann. Vorgeschlagen wurde auch bereits ein Oxidations-Bleich-Desinfektions- und Desodorierungsmittel, welches aus einem flüssigen oder festem Gemisch von Peroxodisulfaten mit Alkalien besteht, bei dessen Anwendung das Peroxodisulfat im alkalischen Bereich wirksam ist und die bei der Umsetzung entstehende Schwefelsäure durch die Alkalikomponente ganz oder teilweise neutralisiert wird. Besonders Gemische von Peroxodisulfaten mit Natriumcarbonat und/oder Natriumpercarbonat sind in diesem Sinne wirksam.

Von den im technischen Maßstab hergestellten Peroxodisulfaten ist das Natriumperoxodisulfat die wichtigste Verbindung. Zunehmend wird das Ammoniumperoxodisulfat wegen der Ammoniumproblematik ersetzt. Gegenüber dem Kaliumperoxodisulfat besteht der Vorteil einer wesentlich besseren Löslichkeit und der Verwendung des billigeren, da bei großtechnischen Prozessen als Abprodukt anfallenden, Natriumsulfats als Rohstoff.

Zugleich ist aber von den drei handelsüblichen Peroxodisulfaten das Natriumperoxodisulfat am schwierigsten direkt elektrochemisch herstellbar, da unter vergleichbaren Bedingungen nur geringere Stromausbeuten erreicht werden und das kristalline Endprodukt aus der meist stark sauren Elektrolytlösung nur schwierig in ausreichend großen, gut filtrierbaren Kristallen zur Auskristallisation gebracht werden kann.

Natriumperoxodisulfat wird deshalb teilweise immer noch indirekt elektrochemisch durch Umsetzung von Ammoniumperoxodisulfat mit Natronlauge nach der Summengleichung

$$(NH_4)_2S_2O_8 + 2\ NaOH \rightarrow Na_2S_2O_8 + 2\ NH_3 + 2\ H_2O$$

hergestellt. Die direkte elektrochemische Herstellung schwefelsaurer Natriumperoxodisulfatlösungen erfolgt nach der Summengleichung

$$Na_2SO_4 + H_2SO_4 \xrightarrow{+/-\ 2\ e} Na_2S_2O_8 + H_2.$$

Dabei wird entweder mit ungeteilten Elektrolysezellen, oder durch mittels poröser Diaphragmen bzw. Ionenaustauschermembranen geteilten Elektrolysezellen gearbeitet. In allen Fällen findet als Anodenmaterial glattes Platin Verwendung, größtenteils aufgebracht auf Stromzuführungen aus den Ventilmetallen Tantal oder Titan. Die verwendeten Kathoden bestehen aus Blei, Edelstahl oder graphitischem Material. Infolge der hohen Löslichkeit des Natriumperoxodisulfats werden bei der Verwendung ungeteilter Zellen meist nur unbefriedigende Stromausbeuten um 50 % erhalten, da ein Teil des anodisch gebildeten Peroxodisulfats kathodisch wieder reduziert wird.

Bei Verwendung geteilter Elektrolysezellen, insbesondere solcher mit Ionenaustauschermembranen als Separatoren, werden unter Zusatz von potentialerhöhenden Stoffen, vorzugsweise Natriumthiocyanat, bei optimierten Elektrolysebedingungen ein bei günstiger übriger Elektrolytzusammensetzung in stark schwefelsaurer Lösung Stromausbeuten bis über 70 % erreicht. Die Bedingungen für eine hohe Stromausbeute werden mit steigendem Schwefelsäuregehalt günstiger, in gleichem Maße nimmt aber auch die Geschwindigkeit der Hydrolysereaktion zur Peroxomonoschwefelsäure zu, die wiederum einen negativen Einfluß auf die Stromausbeute ausübt. Es sind deshalb zur Erreichung solch hoher Stromausbeuten unter diesen Bedingungen möglichst kurze Verweilzeiten, niedrige Elektrolysetemperaturen und/oder Zugabe von selektiv wirkenden Reduktionsmitteln erforderlich, um die stationäre Konzentration an Peroxomonosulfat ausreichend gering zu halten.

Die Kathodenräume werden bevorzugt mit Schwefelsäure beschickt, die sich infolge der elektrochemischen Überführung von Natriumionen in den Kathodenraum mit Natriumsulfat anreichert und deshalb nach weiterer Aufsättigung mit Natriumsulfat als Anolyt eingesetzt werden kann.

Die Verwendung von Kationenaustauschermembranen macht es aber auch prinzipiell möglich, den Kathodenraum alkalisch zu halten und die überführten Natriumionen als Natriumhydroxid zu erhalten und als verdünnte Natronlauge aus dem Prozeß auszukreisen. Die Ausbeute an Natronlauge, bezogen auf den geflossenen Elektrolysestrom ist jedoch gering und liegt bestenfalls bei 30 % Stromausbeute. Dies liegt darin begründet, daß zur Erzielung einer ausreichend großen Stromausbeute der Peroxodisulfatbildung aus den genannten Gründen ein hoher Schwefelsäuregehalt von 100 bis 300 g/l im Anodenraum für unverzichtbar angesehen wird, wodurch in Verbindung mit der

großen Ionenbeweglichkeit der $H^+$-Ionen diese den Hauptteil des Stromtransportes durch die Kationenaustauschermembranen übernehmen. Der Anteil der so herstellbaren Natronlauge ist deshalb gering und rechtfertigt in keiner Weise die durch den pH-Sprung über der Membran verursachte höhere Zellspannung.

Andererseits führt eine Senkung des Schwefelsäuregehaltes zwangsläufig zu einem Abfall der Stromausbeute, da die Löslichkeit des Natriumsulfats dann sprunghaft abfällt und die Sulfationenkonzentration nicht mehr ausreichend groß ist. Es ist deshalb bisher auch nicht gelungen, das Natriumperoxodisulfat nach der im Idealfall anzustrebenden Summenreaktion

$$2\ Na_2SO_4 + 2\ H_2O \xrightarrow{+/-\ 2\ e} Na_2S_2O_8 + 2\ NaOH + H_2$$

ausschließlich aus dem billigen Natriumsulfat, mit wirtschaftlich vertretbar niedrigen spezifischen Elektroenergieverbräuchen in einfachen zweigeteilten Peroxodisulfat-Elektrolysezellen herzustellen.

In Anlehnung an die Kombination von Elektrolyse und Elektrodialyse zur Spaltung von Natriumsulfat in Natronlauge und Schwefelsäure in einer dreigeteilten Elektrolysezelle (z.B. EP 0 257 523 B1) wurde auch bereits vorgeschlagen, Alkalimetall- oder Ammoniumperoxodisulfat und Alkalimetallhydroxid in einer solchen Dreikammerzelle mit kathodenseitig angeordneten Kationenaustauschermembranen und anodenseitig angeordneten Anionenaustauschermembranen herzustellen (DE-OS 44 26 246, EP 0 641 871). DE A 43 26 539 (Familiendokument vom EP 0 641 871) offenbart dazu ein Verfahren zur Herstellung von Alkalilangen und Peroxodisulfaten durch Elektrolyse einer 5 bis 44 gew.%ige alkalisulfathaltige Lösung im Anodenraum einer durch eine Kationenaustauschermembran zweigeteilten Elektrolysezelle bei Temperaturen bis 45°C.

Auch zur Herstellung einer annähernd stöchiometrisch zusammengesetzten Natriumperoxodisulfat-Natriumhydroxid-Oxidationslösung für den oxidativen Schadstoffabbau wurde bereits die Verwendung einer Dreikammerzelle vorgeschlagen. Dabei wird die Mittelkammer, die kathodenseitig durch eine Kationenaustauschermembran und anodenseitig durch eine Anionenaustauschermembran abgegrenzt ist, durch Zudosierung einer gesättigten Natriumsulfatlösung annähernd neutral gehalten. Der Anteil der Natriumionen am Stromtransport durch die Kationenaustauschermembran ist deshalb ausreichend groß. Die aus der Mittelkammer austretende Natriumsulfatlösung gelangt dann in den Anodenraum, in den aus der Mittelkammer mehr Sulfationen übertreten als sie zur Peroxodisulfatbildung benötigt werden. Damit stellt sich der Anodenraum stark schwefelsauer ein, womit dort die erforderlichen Bedingungen für höhere Stromausbeuten über 60 % geschaffen werden können. Durch Vermischen des Anolytaustritts mit der im Kathodenraum gebildeten Natronlauge konnte dann die gewünschte, annähernd stöchiometrisch zusammengesetzte und für den Schadstoffabbau besonders geeignete alkalische Natriumperoxodisulfatlösung gewonnen werden.

Die Nachteile einer solchen Verfahrensweise unter Verwendung einer Dreikammerzelle sind die elektrischen Widerstände der zusätzlichen Mittelkammer und der zusätzlichen Anionenaustauschermembran, die zu einer beträchtlichen Erhöhung der Zellspannung und damit zu einem höheren spezifischen Elektroenergieverbrauch führen. Hinzu kommt, daß die gegenwärtig verfügbaren Anionenaustauschermembranen, welche direkten Kontakt mit der gebildeten Peroxodisulfatlösung haben, wesentlich weniger oxidationsbeständig sind als die Kationenaustauschermembranen, was zu einem häufigeren kostenintensiven Membranwechsel führt. Neben den dadurch bedingten hohen Betriebskosten sind auch die Anschaffungskosten für eine solche Dreikammerzelle im Vergleich zu einer einfacher aufgebauten Zweikammerzelle deutlich höher. Auch werden die anderen mit der direkten elektrochemischen Herstellung von Natriumperoxodisulfat verbundenen Probleme einer schwierigen Reinherstellung kristalliner Produkte aus der stark schwefelsauren Peroxodisulfatlösung durch dieses Verfahren in keiner Weise gelöst. Aus diesen Gründen ist eine solche verfahrenstechnische Lösung für den großtechnischen Einsatz zur kombinierten elektrochemischen Herstellung von Natriumperoxodisulfat und Natronlauge ungeeignet.

Der Erfindung liegt das Problem zugrunde, für ein von Natriumsulfat ausgehendes kombiniertes Herstellungsverfahren für Natriumperoxodisulfat und Natronlauge neue Lösungen zu finden, die in zweigeteilten Elektrolysezellen mit ausreichend hoher Stromausbeute realisierbar sind, die zu leicht handhabbaren bzw. leicht aufarbeitbaren Natriumperoxodisulfatlösungen hoher Konzentration führen und die damit die Nachteile der bekannten Herstellungsverfahren weitgehend vermeiden und zugleich die Herstellung von Natronlauge ohne Anfall von Chlor ermöglichen.

Dieses Problem wird erfindungsgemäß gelöst durch ein Verfahren zur kombinierten elektrochemischen Herstellung von Natriumperoxodisulfat und Natronlauge aus Natriumsulfat, welches dadurch gekennzeichnet ist, daß eine Elektrolyse in mindestens einer Zweikammerelektrolysezelle mit durch Kationenaustauschermembran getrennten Kathoden- und Anodenräumen durchgeführt, eine Elektrolysetemperatur von 30 bis 70 °C eingestellt eine bei dieser Temperatur zumindestens 75 % gesättigte Natriumsulfatlösung in den Anodenraum eingeführt und die Natriumkonzentrationen im Bereich von 4,5 bis 6,0 Mol/l aufrechterhalten und aus dem Kathodenraum Natronlauge ausgekreist

wird.

Die Aufrechterhaltung der Natriumionenkonzentration erfolgt bevorzugt durch Nachlösen von Natriumsulfat oder/und durch Wasserverdampfung. Aus dem Kathodenraum wird zweckmäßig eine 10 bis 40 %-ige Natronlauge, gegebenenfalls durch Zudosierung von Wasser, ausgekreist. Die Elektrolyse wird einstufig oder mehrstufig durchgeführt, die dem Anodenraum zugeführte Natriumsulfatlösung ist vorzugsweise zu mindestens 90 % gesättigt. Die im Verlauf der Elektrolysereaktion verbrauchte Menge an Natriumsulfat kann entweder bereits im Elektrolyten suspendiert werden und/oder es erfolgt bei mehrstufiger Prozeßführung eine Aufsättigung des Elektrolyten mittels kristallinem Natriumsulfat zwischen den Stufen. Bei einer im Elektrolyten suspendierten Menge an Natriumsulfat wird dieses mit zunehmendem Verbrauch an Natriumsulfat nachgelöst und es wird während der gesamten Elektrolyse eine hohe, der Sättigungskonzentration bei der jeweiligen Anolytzusammensetzung entsprechende Natriumsulfatkonzentration aufrechterhalten.

Besonders vorteilhaft ist eine zweistufige Prozeßführung, bei welcher in der ersten Elektrolysestufe der Anolyt über ein Lösegefäß für Natriumsulfat und über die Anodenräume der Elektrolysezelle im Kreislauf geführt wird und in diesen stationären Kreislaufelektrolyten Wasser und kristallines Natriumsulfat in den erforderlichen Mengen eindosiert werden. Dabei können dem Lösegefäß auch im Prozeß anfallende Kristallisate bzw. Mutterlaugen und Waschflüssigkeiten zugeführt werden. Es wird eine vorzugsweise bis 250 g/l Natriumperoxodisulfat enthaltende, an Natriumsulfat annähernd gesättigte Lösung gebildet, die der zweiten Elektrolysestufe zugeführt wird. Hier erfolgt dann unter Verbrauch eines Teils des gelösten Natriumsulfats eine weitere Anreicherung mit Natriumperoxodisulfat bis zur Erreichung der gewünschten Endkonzentration.

Der während der Elektrolyse erfolgenden Abreicherung an Natriumsulfat kann auch dadurch besonders vorteilhaft entgegengewirkt werden, daß eine solche Menge an Wasser verdampft wird, wie zur Aufrechterhaltung der erfindungsgemäß einzuhaltenden Natriumionenkonzentration erforderlich ist.

Vorzugsweise wird das vorgeschlagene Verfahren im Temperaturbereich von 40 bis 60 °C betrieben, in dem die niedrigsten spezifischen Elektroenergieverbräuche erreicht werden können. Diese relativ hohe, vorzugsweise einzuhaltende Elektrolysetemperatur von 40 bis 60 °C ermöglicht auch eine wirtschaftlich vorteilhafte Abführung der Joulschen Wärme durch Vakuumverdampfung mittels bekannter Verfahren, wobei gleichzeitig die gewünschte Aufsättigung des Anolyten erfolgt. Durch Zudosierung eines Teils des bei der Abführung der Verlustwärme anfallenden Kondensats kann die Natriumsulfatkonzentration im Bereich der Sättigungskonzentration und die Natriumionenkonzentration im Bereich von 4,5 bis 6,0 Mol/l eingestellt werden.

Beim vorgeschlagenen Verfahren war überraschend, daß bei Verwendung der annähernd neutralen gesättigten Natriumsulfatlösung als Anolyt die Stromausbeute bei Erhöhung der Elektrolystemperatur auf die erfindungsgemäß einzuhaltenden 30 bis 70 °C, vorzugsweise 40 bis 60 °C, deutlich zunimmt, völlig im Gegensatz zum bisherigen Kenntnisstand.

Dies ist umso überraschender, da bekannt ist, daß die Löslichkeit des Natriumsulfats bei der Umwandlungstemperatur vom 10-Hydrat zum wasserfreien Salz von 32,38 °C ein Maximum (32,2 Gew.-%) durchläuft. Das heißt aber, daß bei den vorzugsweise anzuwendenden Temperaturen von 40 bis 60 °C die Löslichkeit des Natriumsulfats bereits wieder geringer wird. Auch mit der während der Elektrolyse zunehmenden Konzentration an Natriumperoxodisulfat sinkt die Löslichkeit des Natriumsulfats weiter ab, so daß im Verlauf der Elektrolyse die Natriumsulfatkonzentration trotz der erfindungsgemäß erfolgenden Aufsättigung stark abnimmt.

Auch in einer an Natriumperoxodisulfat gesättigten Lösung nimmt die Löslichkeit des Natriumsulfats mit steigender Temperatur im Bereich von 10 bis 20 °C zunächst stark zu, um dann wieder abzunehmen. Trotzdem wurden im Temperaturbereich von 40 bis 60 °C die höchsten Stromausbeuten erhalten. Auch die spezifischen Elektroenergieverbräuche durchlaufen hier ein Minimum, da sich besonders im Temperaturbereich von 30 bis 50 °C die Zellspannung stark verringert.

Es wurde auch gefunden, daß eine wichtige weitere Voraussetzung für eine ausreichend hohe Stromausbeute der Peroxodisulfatbildung bei gleichzeitiger Aufrechterhaltung eines nur geringen Schwefelsäuregehaltes im Anolyten eine ausgewogene Beteiligung der Natriumionen am Stromtransport ist. Diese kann bekanntlich insbesondere durch die Selektivität der verwendeten Kationenaustauschermembranen, aber auch durch die Konzentration der Natriumionen im Anolyten, beeinflußt werden. Es wurde gefunden, daß eine Konzentration von 4,5 bis 6,0 Mol/l an Natriumionen während der Dauer der Elektrolyse aufrechterhalten werden muß, um bei den üblichen Kationenaustauschermembranen die erforderliche Überführung der Natriumionen im Bereich der maximal erreichbaren anodischen Stromausbeute zu gewährleisten. Treten z.B. weniger Natriumionen durch die Membran als Sulfationen anodisch zu Peroxodisulfat umgesetzt werden, wird im Anodenraum Schwefelsäure verbraucht, der pH-Wert nimmt zu und das Gleichgewichtspotential der anodischen Sauerstoffentwicklung nimmt ab. Dadurch verringert sich die Stromausbeute der Peroxodisulfatbildung, bis sie sich der Überführungszahl der Natriumionen angeglichen hat.

Besonders in der Anfangsphase der Elektrolyse, bei der noch hohe Stromausbeuten der Peroxodisulfat-Elektrolyse erreicht werden, kann die Zugabe geringer Säuremengen bis zu 30 g/l deshalb von Vorteil sein.

Ist umgekehrt durch Verwendung einer selektiven Kationenaustauschermembran, wie sie z.B. für die Chloralkalielektrolyse eingesetzt wird, die Überführungszahl der Natriumionen wesentlich höher als die Stromausbeute der Peroxodisulfatbildung, reichert sich im Anodenraum zunehmend Schwefelsäure an. Damit beteiligen sich verstärkt Wasserstoffionen am Stromtransport durch die Membran und auch die Stromausbeute der anodischen Peroxodisulfatbildung wächst infolge des zunehmenden Gleichgewichtspotentials der Sauerstoffabscheidung an. Der Gleichgewichtszustand wird dann bei einem höheren Schwefelsäuregehalt im Anolyten erreicht als bei Verwendung von Kationenaustauschermembranen mit geringerer Selektivität.

Ein zu hoher Gehalt an Schwefelsäure, wie er insbesondere bei hohen Peroxodisulfatkonzentrationen am Ende des Elektrolyseprozesses, bei mehrstufiger Prozeßführung besonders in der letzten Stufe auftreten kann, bewirkt aber auch wieder eine zu große Hydrolysegeschwindigkeit. Die gebildete Peroxomonoschwefelsäure führt aber bekanntlich durch Depolarisation der Anoden zu einer Stromausbeuteminderung. Nach einem weiteren Merkmal der Erfindung kann dies dadurch verhindert werden, daß durch Rückführung eines Teiles der kathodisch entstehenden Natronlauge in den Anolyten der pH-Wert dort auf 0,5 bis 2 eingestellt wird.

Die nach dem vorgeschlagenen Verfahren gewonnene Natriumperoxodisulfatlösung enthält je nach der Natriumperoxodisulfat-Endkonzentration teilweise noch erhebliche Mengen an gelöstem Natriumsulfat, da hohe Umsetzungsgrade wegen der dann zu geringen Restgehalte an Sulfat nur bei starkem Abfall der Stromausbeute realisierbar sind. Bei mehrstufiger Prozeßführung mit Zugabe weiterer Natriumsulfatmengen zwischen den einzelnen Stufen werden typischerweise Natriumperoxodisulfatlösungen erhalten, die neben den erwünschten ca. 200 bis 550 g/l Natriumperoxodisulfat noch einen Überschuß von 70 g/l Natriumsulfat (bei 550 g/l NaPS) bis 250 g/l (bei 200 g/l NaPS) enthalten.

Eine wesentliche Voraussetzung für die erfindungsgemäße Prozeßführung und die Anwendungsmöglichkeiten für die erhaltenen Natriumperoxodisulfatlösungen ist das gefundene überraschende Verhalten der Löslichkeit des Natriumperoxodisulfats in einer an Natriumsulfat gesättigten Lösung.

Während die gefundene starke Zunahme der Löslichkeit des Natriumsulfats mit der Temperatur im Bereich von 10 bis etwa 29 °C und deren Abnahme nach Durchlaufen des Maximums bei 29 °C zu erwarten war, so war es völlig überraschend, daß die Löslichkeit des Natriumperoxodisulfats nach einem Abfall bis 29 °C im beanspruchten Temperaturbereich von 30 bis 70 °C wieder stark zunimmt. Daraus ergibt sich die Möglichkeit, die bei der bevorzugten Arbeitstemperatur von 40 bis 60 °C erhaltene, an beiden Stoffen annähernd gesättigte Anolytlösung einerseits durch Abkühlung auf 10 bis 25 °C von der Hauptmenge des gelösten Natriumsulfats zu befreien, andererseits aber auch durch Abkühlung lediglich auf das Löslichkeitsminimum für das Natriumperoxodisulfat im Bereich von 30 °C einen Teil des Natriumperoxodisulfats zur Auskristallisation zu bringen.

Somit kann eine weitgehende Abreicherung des Natriumsulfatgehaltes aus der durch Elektrolyse erhaltenen Natriumperoxodisulfat-Natriumsulfat-Lösung erfolgen, indem nach Anspruch 7 der größte Teil des überschüssigen Natriumsulfats durch Kühlungskristallisation rückgewonnen und dem Prozeß wieder zugeführt wird. Dabei kommt es auch dann nicht zur Auskristallisation von Natriumperoxodisulfat, wenn die im Elektrolyseprozeß erreichte Endkonzentration an Natriumperoxodisulfat hohe Werte im Bereich von 400 bis 450 g/l erreicht. Das bei der Kühlungskristallisation rückgewonnene Natriumsulfat, möglicherweise "verunreinigt" mit Natriumperoxodisulfat, kann dem Elektrolyseprozeß ohne jegliche Reinigungsoperationen wieder zugeführt werden. Es hat sich gezeigt, daß auf diese Weise der Restgehalt an Natriumsulfat bei Abkühlung der Peroxodisulfatlösung auf 10 bis 15 °C auf 30 bis 60 g/l reduziert werden kann. Da in diesem Temperaturbereich das Natriumsulfat als 10-Hydrat auskristallisiert, wird außerdem Wasser entfernt und es kommt sogar noch zu einer Erhöhung des Gehaltes an Natriumperoxodisulfat.

Zur Herstellung eines kristallinen Natriumperoxodisulfats aus der erhaltenen Anolytlösung ergeben sich aus diesem Löslichkeitsverhalten prinzipiell die folgenden beiden Wege:

1. Das Natriumperoxodisulfat wird aus der bei 40 bis 60 °C erhaltenen, annähernd gesättigten Elektrolyselösung durch Abkühlung auf ca. 30 °C auskristallisiert und nach bekannten Verfahren aufgearbeitet. Da sich dabei die Löslichkeit des Natriumsulfats erhöht, kommt es auch nicht zur Auskristallisation von Natriumsulfat. Nach Erwärmen der erhaltenen Mutterlauge auf Elektrolysetemperatur und Aufsättigung mit Natriumsulfat kann der Elektrolyseprozeß fortgesetzt und somit ein Kreislaufprozeß zur Herstellung des kristallinen Natriumperoxodisulfats begründet werden. Ungünstig auf die erreichbare Stromausbeute wirkt sich bei einem Kreislaufprozeß jedoch aus, daß die Elektrolyse mit einer sehr hohen Konzentration an Natriumperoxodisulfat von ca. 410 g/l begonnen werden muß.

2. Das kristalline Natriumperoxodisulfat wird aus der bei 40 bis 60 °C erhaltenen annähernd an Natriumperoxodisulfat und Natriumsulfat gesättigte Lösung in folgender Weise erhalten: Durch Abkühlung auf 10 bis 25 °C wird zunächst die Hauptmenge des überschüssigen Natriumsulfats abgetrennt, wobei sich der Natriumperoxodisulfatgehalt weiter erhöht. Danach wird die Lösung im Vakuumkristallisator auf etwa Sättigungskonzentration des verbleibenden Natriumsulfats aufkonzentriert und das Peroxodisulfat beim Löslichkeitsminimum um 30 °C zur Auskristallisation gebracht. Da das Natriumsulfat bei dieser Temperatur das Löslichkeitsmaximum erreicht, kommt es

auch dabei nicht zur Auskristallisation von Natriumsulfat. Die nach Abtrennung des kristallinen Natriumperoxodisulfats erhaltene Mutterlauge entspricht in ihrer Zusammensetzung etwa der aus der Elektrolyse austretenden Anolytlösung und kann dieser vor Entfernung des Natriumsulfats zugesetzt werden. Die Elektrolyse selbst kann deshalb stets mit frisch hergestellter Natriumsulfatlösung begonnen werden, weshalb deutlich höhere Stromausbeuten als bei der ersten Variante erreichbar sind.

Andererseits ergeben sich natürlich auch für die im Elektrolyseprozeß erhaltenen hochkonzentrierten Natriumperoxodisulfatlösungen vielfältige Anwendungsmöglichkeiten, ohne über das kristalline Peroxodisulfat gehen zu müssen. Dabei kann vor der Anwendung der größte Teil des überschüssigen Natriumsulfats wieder durch Abkühlung auf 10 bis 25 °C entfernt werden. Für manche Anwendungen ist dies aber nicht unbedingt erforderlich. Beispielsweise können die zur Verwendung als Bleich- und Oxidationslösungen, z.B. zum Schadstoffabbau in der Umwelttechnik, dienenden alkalischen Peroxodisulfatlösungen in einfacher Weise durch Vermischen des Anolyten mit dem Katholyten am Zellenausgang in situ hergestellt werden. Durch die dabei eintretende "Verdünnung" des Anolyten kommt es auch bei Zwischenlagerung und Abkühlung auf Raumtemperatur nicht zu einer Auskristallisation von Natriumsulfat.

Eine andere mögliche Aufarbeitungsform ist das Eindampfen der erhaltenen Natriumperoxodisulfatlösungen bis zur Trockene mit dem Ziel der Herstellung eines festen, vorzugsweise granulierten Peroxodisulfat-Konzentrates, mit oder ohne vorherige Abreicherung von Natriumsulfat. Solche Produkte können durch Zerstäubungstrocknung und besonders durch Aufsprühen der Lösung unter trocknenden Bedingungen auf ein Wirbelbett von Granalien des erhaltenen Feststoffs hergestellt werden. Die so erhaltenen Wirkstoffkonzentrate lassen sich anstelle des reinen kristallinen Natriumperoxodisulfats vorteilhaft, da kostengünstiger herstellbar, besonders für Anwendungen in der Umwelttechnik nutzen.

Die elektrochemisch gebildeten hochkonzentrierten Natriumperoxodisulfatlösungen können aber auch auf Granulate anderer Stoffe unter trocknenden Bedingungen aufgesprüht werden. Bei Verwendung alkalischer Grundkörper, beispielsweise Natriumcarbonat, erhält man ein festes alkalisches Wirkstoffgemisch, wie es für den Schadstoffabbau in Prozeßlösungen und Abwässern vorteilhaft eingesetzt werden kann. Verwendet man nach einem weiteren Merkmal der Erfindung als zu besprühendes Granulat ein Natriumpercarbonat, erhält man die an sich bekannte Wirkstoffkombination aus Natriumperoxodisulfat und Natriumpercarbonat. Bei der erfindungsgemäßen Herstellung aus der elektrochemisch generierten hochkonzentrierten annähernd neutralen Natriumperoxodisulfatlösung ergeben sich im Vergleich zur Herstellung durch Vermischen der festen Komponenten die folgenden Vorteile:

1. Läßt sich diese Wirkstoffkombination wesentlich kostengünstiger herstellen, da die Natriumperoxodisulfatlösung ohne aufwendige Reinigungsoperationen und ohne Kristallisations- und Trockenprozesse einsetzbar ist.

2. Überraschend bewirkt die Konzentrierung der Peroxodisulfatkomponente in der äußeren Schicht der gebildeten Granalien eine Abschirmung des im Kern konzentrierten empfindlicheren Natriumpercarbonats vor den Einwirkungen katalytisch wirkender anderer Bestandteile komplex zusammengesetzter Wasch- und Reinigungsmittel. Es wurde gefunden, daß man auf diese Weise ein hochbeständiges gecoatetes Percarbonat für vielfältige Anwendungszwecke herstellen kann. Dabei stört weder der Anteil von Natriumsulfat in der Hüllschicht noch ein Anteil von Natriumcarbonat im Kernbereich der gebildeten Granalien.

Es wurde weiter gefunden, daß die kathodisch gebildete Natronlauge bereits in den Kathodenräumen mit zugesetzten oder kathodisch gebildeten Reaktionspartnern zu Folgeprodukten umgesetzt werden können. Gegenüber einer nachgeschalteten Umsetzung kann dies mit einer Reihe von Vorteilen verbunden sein. Einerseits kann diese Umsetzung direkt im Katholyten positive Rückwirkungen auf den gesamten Elektrolyseprozeß haben, z.B. durch Beeinflussung der Überführung der verschiedenen Ionen durch die Membranen. Andererseits kann die Einbeziehung des eigentlichen Kathodenprozesses, ohne zusätzlichen Elektrolysestrom aufwenden zu müssen, zu völlig anderen Reaktionsmöglichkeiten führen, wie sie in einem nachgeschalteten Umsetzungsprozeß nicht oder nicht mit gleicher Wirtschaftlichkeit realisierbar sind.

So wurde gefunden, daß die Folgeprodukte Natriumcarbonat oder Natriumbicarbonat vorteilhaft durch Einleiten von Kohlendioxid in den Katholyten herstellbar sind. Gegenüber einer nachgeschalteten Umsetzung der gebildeten Natronlauge wird dadurch die Hydroxylionenkonzentration im Kathodenraum herabgesetzt. Dadurch wird eine Rückdiffusion von Hydroxylionen in den Anodenraum, die sich bei höheren Laugekonzentrationen stromausbeutemindernd auswirkt, zurückgedrängt.

Ein anderes nach dem Verfahren herstellbares wertvolles Folgeprodukt ist eine zur Bleiche von Papier und Zellstoff einsetzbare alkalische Natriumperoxidlösung. Sie entsteht, wenn anstelle der kathodischen Wasserstoffentwicklung durch den Einsatz einer an sich bekannten Gasverzehrelektrode, z.B. einer Sauerstoff-Diffusionselektrode oder einer gasumspülten Kohleelektrode mit hoher Oberfläche und Aktivität, eine Sauerstoffreduktion zum Wasserstoffperoxid vorgenommen wird. Da diese Reaktion in alkalischer Lösung abläuft, kann die kathodisch gebildete Natronlauge sehr vorteilhaft, weil kostengünstig, für dieses Folgeprodukt genutzt werden. Durch Depolarisation der Kathode wird außerdem der Elektrolysestromverbrauch weiter herabgesetzt. Unter Nutzung der relativ geringen Löslichkeit des Natriumperoxid-Oktahydrats wird dieses auch aus der Kathodenlösung zur Auskristallisation gebracht. Eine vorteilhafte Kombination ist auch die Vermischung einer solchen alkalischen Wasserstoffperoxidlösung mit der anodisch gebildeten Natriumperoxodisulfatlösung. Man erhält so eine hochaktive alkalische Oxidationslösung, die das für den Schadstoffabbau und für Bleichprozesse geeignete Wirkstoffgemisch Peroxodisulfat-Wasserstoffperoxid enthält.

Zusammenfassend ergeben sich durch das vorgeschlagene Verfahren im Vergleich zum derzeitigen Stand der Technik bei der Herstellung von Natriumperoxodisulfat die folgenden Vorteile:

- Ausgangsstoff ist allein das als Koppelprodukt bei großtechnischen Prozessen anfallende Natriumsulfat.
- Es sind hohe Endkonzentrationen an Natriumperoxodisulfat von 400 bis 500 g/l möglich.
- Da die Elektrolyse im nur schwach sauren Bereich abläuft, spielt die Hydrolyse zum Peroxomonosulfat keine Rolle, es gibt deshalb keine Begrenzung der Verweilzeit und es sind keine reduzierenden Zusätze erforderlich, um eine stationäre Konzentration an Peroxomonoschwefelsäure niedrig zu halten.
- Es ist leicht möglich, den größten Teil des unumgesetzten Natriumsulfats durch Abkühlung auf 10 bis 20 °C als 10-Hydrat auszukristallisieren und dadurch gleichzeitig die Peroxodisulfatlösung weiter aufzukonzentrieren.
- Es ist aber auch möglich, aus den hochkonzentrierten Lösungen beim Löslichkeitsminimum von 28 bis 30 °C reines Natriumperoxodisulfat zur Auskristallisation zu bringen. Da diese Kristallisation aus einer annähernd neutralen Lösung erfolgt, sind keine zusätzlichen kostenaufwendigen Operationen zur Reinigung bzw. zur Kristallvergröberung (Umkristallisation) erforderlich.
- Die hohe Elektrolysetemperatur von vorzugsweise 40 bis 60 °C ermöglicht eine günstige Abführung der Joulschen Wärme durch Vakuumverdampfung, womit gleichzeitig eine Volumenverminderung zur Aufrechterhaltung der erforderlichen Natriumionenkonzentration von 5 bis 6 Mol/l erreicht werden kann.
- Die erreichbare hohe Reinheit und Konzentration und elektrochemisch generierten Natriumperoxodisulfatlösung ermöglicht vielfältige Anwendungen, ohne eine vorherige Auskristallisation des Peroxodisulfats vornehmen zu müssen. Damit können neue Anwendungen erschlossen und bekannte wirtschaftlicher gestaltet werden (z.B. Bleiche für Papier und Zellstoff, in-situ-Herstellung von Polymerisationsinitiatoren).
- Die hochkonzentrierte Natriumperoxidlösung eignet sich auch zur kostengünstigen Herstellung fester Konzentrate durch Sprühtrocknung, wobei auch als Oxidations- und Bleichmittel geeignete Stoffverbunde, z.B. mit Natriumpercarbonat, leicht herstellbar sind.
- Durch Umsetzung der kathodisch gebildeten Natronlauge mit dem Katholyten zugesetzten oder durch die Kathodenreaktion gebildeten Reaktionspartnern zu Folgeprodukten ist es möglich, positive Rückwirkungen auf den Elektrolyseprozeß zu erreichen bzw. den Kathodenprozeß in vorteilhafter Weise für die wirtschaftliche Herstellung solcher Folgeprodukte mitzunutzen.

**Anwendungsbeispiele**

**Beispiel 1**

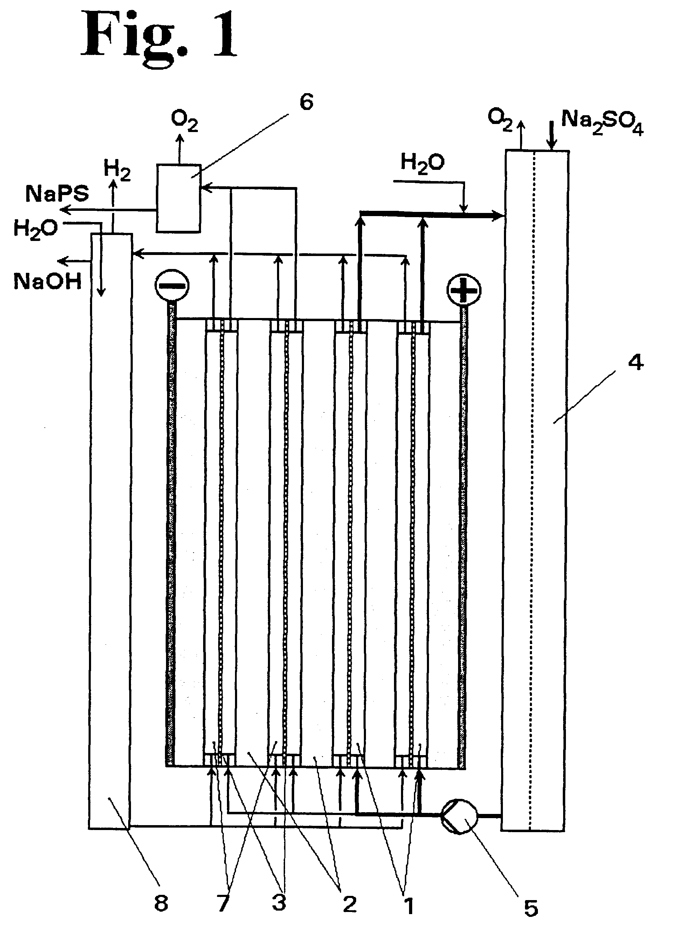

Zur Herstellung einer Natriumperoxodisulfatlösung diente ein zweistufiger Elektrolyseprozeß. Die Versuchsanordnung ist in der Figur 1 schematisch dargestellt. Die verwendete zweigeteilte, aus vier bipolaren Einzelzellen bestehende Elektrolysezelle war als Gas-Lift-Zelle ausgebildet und besaß eine dafür optimierte Höhe von 2 m. Je zwei Einzelzellen wurden den beiden Elektrolysestufen I und II zugeordnet und die Anodenräume 1 parallel vom betreffenden Anolyten durchflossen. Die Elektrodenplatten 2 enthielten Anoden aus glattem Platin auf Stromzuführungen aus Tantal sowie Kathoden aus Edelstahl. Als Separatoren 3 dienten Kationenaustauschermembranen vom Typ Nafion. Die vier Einzelzellen wurden mit je 150 A Elektrolysestrom belastet. Die anodische Stromdichte lag bei 5 kA/m$^2$, die kathodische Stromdichte bei 2 kA/m$^2$. Durch eine Innenkühlung wurde der Anolyt auf ca. 45 °C temperiert.

In der ersten Elektrolysestufe wurde ein Kreislaufanolyt über die Anodenräume 1 und einem äußeren Lösegefäß 4 mit Natriumsulfatzufuhr durch die Pumpe 5 im Kreislauf umgepumpt. In diesen Anolytkreislauf wurde lediglich

Wasser eingespeist, dem als potentialerhöhender Zusatz Natriumthiocyanat in einer Menge von 0,15 g/l zugesetzt wurde. Der in die zweite Elektrolysestufe übertretende Kreislaufelektrolyt, der an Natriumsulfat bei der Elektrolystemperatur von 45 °C annähernd gesättigt war (340 g/l) und der etwa 118 g/l Natriumperoxodisulfat enthielt, durchströmte danach die Anodenräume der zweiten Elektrolysestufe II. Der Natriumsulfatgehalt wurde durch die Peroxodisulfatbildung und den Durchtritt von Natriumionen durch die Kationenaustauschermembran um etwa 125 g/l abgereichert, während der Gehalt an Natriumperoxodisulfat auf ca. 225 g/l anstieg. Die Konzentration der Natriumionen betrug 4,9 Mol/l. Der aus dem Gasabscheider 6 austretende Anolyt-Volumentstrom lag bei 8,1 l/h. Eine Natronlauge mit einem Gehalt von 170 g/l diente als Katholyt. Dieser wurde mittels Gas-Lift über alle vier parallel geschalteten Kathodenräume 7 und das Katholytgefäß 8 im Kreislauf gefördert. In diesen Katholytkreislauf wurde kontinuierlich Wasser in einer solchen Menge eindosiert, daß die am Überlauf austretende Natronlauge im Konzentrationsbereich von 150 bis 200 g/l lag (Bereich des Leitfähigkeitsmaximums). Es errechnet sich eine Stromausbeute der NaPS-Bildung von 68,4 %. Etwa der gleiche Wert ergibt sich auch für die Stromausbeute der Natronlaugebildung. Der austretende Anolyt enthielt nur geringe Schwefelsäuremengen (ca. 3 g/l), so daß entsprechend dem Formelumsatz je Mol Peroxodisulfat ca. 2 Mol Natriumhydroxid gebildet wurden. Die Zellspannung lag bei 6,1 V, daraus errechnet sich ein spezifischer Gleichstromverbrauch, bezogen auf das erhaltene Natriumperoxodisulfat, von 2,01 kWh/kg.

**Beispiel 2**

Zur Herstellung einer annähernd stöchiometrisch zusammengesetzten alkalischen Natriumperoxodisulfatlösung wurde der Versuch gemäß Beispiel 1 wiederholt und der austretende Anolyt direkt in den Überlauf des Katholytkreislaufes eingebunden. Es entstanden 11,6 l/h einer stöchiometrisch zusammengesetzten, zum Schadstoffabbau geeigneten alkalischen Oxidationslösung mit einem Gehalt an Natriumperoxodisulfat von 157 g/l und an Natriumhydroxid von 53 g/l.

**Beispiel 3**

Zur Herstellung einer an Natriumsulfat abgereicherten wäßrigen Lösung von Natriumperoxodisulfat (geeignet z.B. als Initiatorlösung für Polymerisationsprozesse), wurde der aus Beispiel 1 stammende Anolyt unter Rühren auf ca. 10 °C abgekühlt. Der entstehende Kristallbrei von Glaubersalz (10-Hydrat) wurde abgefrittet. Das Filtrat enthielt mit 331 g/l einen höheren Natriumperoxodisulfatgehalt als die Ausgangslösung, bedingt duch den Entzug von Wasser für die Kristallbildung. Der Gehalt an überschüssigem Natriumsulfat lag nur noch bei 61 g/l. Bezogen auf den Formelumsatz entspricht diese Zusammensetzung einem ca. 87 %-igen Umsetzungsgrad des Natriumsulfats. Das abgetrennte Natriumsulfat kann dem Elektrolyseprozeß ohne zusätzliche Reinigungsoperation (Waschen mit Wasser) wieder zugeführt werden (Lösegefäß). Weder der Wasserhaushalt noch die Ausbeute an Natriumperoxodisulfat werden dadurch negativ beeinflußt, wenn die Wassermenge und die rückgeführten Natriumsulfat- und Natriumperoxodisulfatmengen in der Gesamtbilanz berücksichtigt werden (geringere Dosierung für Natriumsulfat und Wasser, etwas höhere Endkonzentration an Natriumperoxodisulfat).

**Beispiel 4**

Die im Beispiel 3 erhaltene, an Natriumsulfat abgereicherte Natriumperoxodisulfatlösung wurde mit der im Versuch 1 kathodisch gebildeten Natronlauge im Volumenverhältnis 1:0,64 vermischt. Es entstand eine zum Schadstoffabbau in Prozeßlösungen und Abwässern geeignete alkalische Peroxodisulfatlösung der Zusammensetzung 201 g/l Natriumperoxodisulfat, 68 g/l NaOH, 38 g/l Natriumsulfat. Das Molverhältnis NaOH/NaPS lag bei 2,01, die Lösung war also annähernd stöchiometrisch zusammengesetzt.

**Beispiel 5**

Die im Beispiel 1 verwendete Apparatur wurde dahingehend verändert, daß lediglich die beiden Einzelzellen der ersten Elektrolysestufe benutzt wurden, die Stromkapazität wurde damit auf 2 x 150 A verringert. In den über das Lösegefäß geführten Anolytkreislauf wurden 7,7 l/h einer bei ca. 30 °C an Natriumperoxodisulfat gesättigten und an Natriumsulfat annähernd gesättigten Mutterlauge eindosiert. Die Elektrolyse wurde bei einer Temperatur von etwa 45 °C betrieben. Der Katholytumlauf wurde wie im Beispiel 1 belassen. In den umlaufenden Kreislaufkatholyten mit ca. 170 g/l NaOH wurde kontinuierlich Wasser eindosiert. Aus den Anodenräumen trat eine mit Natriumperoxodisulfat auf 460 g/l angereicherte und an Natriumsulfat auf 111 g/l abgereicherte Peroxodisulfatlösung aus (ca. 5,5 Mol/l Natriumionenkonzentration). Das entspricht einer Stromausbeute von 57,8 %. Von der erhaltenen Lösung wurden 5 1 in einem auf 30 °C temperierten Glasrührgefäß gesammelt und mit 600 g Natriumsulfat versetzt. Nach einer Rührzeit von 30 min wurde der Bodenkörper abgefrittet, 4 x mit je 50 ml Wasser gewaschen, getrocknet und die Menge sowie der

Gehalt an Natriumperoxodisulfat bestimmt. Es wurden 405 g eines 98,5 %-igen Natriumperoxodisulfats erhalten. Es fielen 210 ml Waschflüssigkeit mit einem NaPS-Gehalt von 480 g/l an. Die erhaltene Mutterlauge entsprach in der Zusammensetzung der zur Elektrolyse eingesetzten. Somit ist ein kontinuierlicher Kreisprozeß zur Herstellung kristallinem Natriumperoxodisulfats möglich. Die Zellspannung lag bei 6,3 V. Es errechnet sich daraus ein spezifischer Gleichstromverbrauch von 2,45 kWh/kg.

**Beispiel 6**

Bei der im Beispiel 1 beschriebenen Versuchsapparatur wurde unter sonst gleichen Bedingungen eine 20 g/l Schwefelsäure enthaltende wäßrige Lösung anstelle des im Beispiel 1 verwendeten Wassers in den Anolytkreislauf eingespeist. Der aus der zweiten Elektrolysestufe austretende Anolyt enthielt 253 g/l Natriumperoxodisulfat. Der Schwefelsäuregehalt war auf 14 g/l zurückgegangen. Der austretende Volumenstrom wurde mit 8,0 l/h gemessen. Es wrude also ein Teil der eingebrachten Schwefelsäure verbraucht, wodurch sich eine im Vergleich zum Beispiel 1 um 4,3 % auf 72,7 % erhöhte Stromausbeute ergab. Mit der Zellspannung von 6,1 V errechnet sich ein spezifischer Gleichstromverbrauch von 1,89 kWh/kg.

**Beispiel 7**

Die im Beispiel 5 verwendete Versuchsapparatur wurde in der Weise modifiziert, daß die Anolytlösung im Batch-Betrieb über ein Vorratsgefäß im Kreislauf geführt wird. In dieses Vorratsgefäß wurde gleichzeitig Natriumsulfat eindosiert, so daß immer ein Anteil als Bodenkörper vorlag und somit stets soviel Natriumsulfat nachgelöst wurde, wie im Elektrolyseprozeß umgesetzt wurde. Ausgegangen wurde von einer bei Elektrolysetemperatur von ca. 45 °C an Natriumsulfat gesättigten neutralen Lösung, die wieder ca. 0,15 g/l Natriumthiocyanat enthielt. Die Elektrolyse wurde über 5 Stunden mit 2 x 150 A betrieben. Kathodenseitig wurde eine Natronlauge mit einem Gehalt um 175 g/l ausgekreist. Die Zellspannung lag bei 6,3 V. Nach Elektrolyseende wurden dem Anolytkreislauf 10,5 1 einer 428 g/l Natriumperoxodisulfat enthaltenden Lösung entnommen, die außerdem 153 g/l Natriumsulfat und nur 3 g/l Schwefelsäure enthielt (Stromausbeute 67,5 %, spez. Elektroenergieverbrauch 2,1 kWh/kg).

**Beispiel 8**

Die Elektrolyse im Batch-Betrieb gemäß Beispiel 7 wurde unter sonst gleichen Bedingungen, aber mit veränderten Elektrolysetemperaturen von 30, 35, 40, 50, 55 und 60 °C durchgeführt. Die erhaltenen Ergebnisse nach 5-stündiger Elektrolysedauer sind in der Tabelle zusammengestellt (unter Einbeziehung der Ergebnisse von Beispiel 7).

| Elektrolysetemperatur °C | Anolytvolumen l | NaPS-Konzentration g/l | Zellspannung V | Stromausbeute % | spez. Elekt. Ener.Verbr. kWh/kg |
|---|---|---|---|---|---|
| 30 | 10,5 | 390 | 7,3 | 61,0 | 2,70 |
| 35 | 10,5 | 400 | 7,2 | 63,0 | 2,57 |
| 40 | 10,5 | 422 | 6,6 | 66,5 | 2,24 |
| 45 | 10,5 | 428 | 6,3 | 67,5 | 2,10 |
| 50 | 10,5 | 432 | 6,2 | 68,1 | 2,05 |
| 55 | 10,4 | 420 | 6,1 | 65,5 | 2,10 |
| 60 | 10,1 | 400 | 6,0 | 60,7 | 2,23 |

Unter diesen Bedingungen wurden also bei 50 °C die höchsten Stromausbeuten und vor allen Dingen die niedrigsten spezifischen Elektroenerigeverbräuche erhalten.

**Beispiel 9**

Die in den Beispielen 7 und 8 erhaltenen hochkonzentrierten Natriumperoxodisulfat-Natriumsulfatlösungen wurden in einen Wirbelschichtgranulator bei gleichzeitiger Wasserverdampfung eingesprüht, wobei ein Granulat mit einer Körnung im Bereich von 0,2 bis 0,6 mm und einem Gehalt an Natriumperoxodisulfat von ca. 73 % erhalten wurde. Dieses Granulat läßt sich in vielfältiger Weise als Oxidations-, Bleich-, Desinfektions- und Entgiftungsmittel anstelle

des reinen, kristallinen Natriumperoxodisulfats einsetzen.

**Beispiel 10**

Die in den Beispielen 7 und 8 erhaltenen hochkonzentrierten Natriumperoxodisulfat-Natriumsulfat-Lösungen wurden in einer Wirbelschichtapparatur auf kristallines Natriumcarbonat bei gleichzeitiger Wasserverdampfung aufgedüst. Es wurde ein Granulat erhalten, welches zu 25,1 % aus Natriumcarbonat, 56,6 % aus Natriumperoxodisulfat und 18,7 % aus Natriumsulfat bestand. Im Hinblick auf den Gehalt an Natriumperoxodisulfat und Natriumcarbonat war dieses Granulat annähernd stöchiometrisch zusammengesetzt und kann als wirksames Oxidations-, Bleich- und Entgiftungsmittel eingesetzt werden.

**Beispiel 11**

Mit der gleichen Versuchsanordnung wie im Beispiel 7 wurden 10 1 einer bei 40 °C gesättigten Natriumsulfatlösung mit einem Gehalt von 420 g/l (5,0 Mol/l $Na^+$) und einem Zusatz von 0,15 g/l Natriumthiocyanat über die Anodenräume im Kreislauf umgepumpt. Die Elektrolysetemperatur wurde auf ca. 50 °C eingestellt. Zusätzlich wurde in diesen Kreislauf ein Vakuumverdampfer eingeschaltet, mit dem stündlich etwa 1,1 1 Wasser verdampft wurden. Es wurde wieder mit 2 x 150 A, jedoch nur über 3 Stunden elektrolysiert. Erhalten wurden 6,8 1 einer hochkonzentrierten Lösung, die 401 g/l Natriumperoxodisulfat, 142 g/l Natriumsulfat, ca. 3 g/l Schwefelsäure enthielt (5,4 Mol/l $Na^+$). Das entspricht einer Stromausbeute der Peroxodisulfatbildung von 68,2 %. Kathodisch wurden 5,1 1 Natronlauge der 178 g/l ausgekreist (68,6 % Ausbeute).

**Beispiel 12**

Die im Beispiel 11 erhaltene Lösung wurde auf 15 °C abgekühlt und der größte Teil des Natriumsulfats als 10-Hydrat zur Auskristallisation gebracht. Die abgetrennte Lösung enthielt 488 g/l Natriumperoxodisulfat und 61 g/l Natriumsulfat. Diese Zusammensetzung entspricht einem Umsetzungsgrad von ca. 91 %. Eine solche Lösung ist für vielfältige Anwendungen geeignet, z.B. auch als in situ herstellbarer Polymerisationsinitiator.

**Beispiel 13**

Die nach Beispiel 11 hergestellte und nach Beispiel 12 an Natriumsulfat abgereicherte Peroxodisulfatlösung wurde in einem Vakuumkristallisator auf ca. 1/3 des Ausgangsvolumens eingeengt und bei 30 °C das Natriumperoxodisulfat zur Auskristallisation gebracht. Der Kristallbrei wurde abgefrittet und mit wenig Wasser mehrfach ausgewaschen. Nach erfolgter Trocknung wurde ein Gehalt an Natriumperoxodisulfat von 99,2 % ermittelt. Die abgetrennte Mutterlaufe hatte einen Gehalt an Natriumperoxodisulfat von 375 g/l und einen Natriumsulfatgehalt von 184 g/l. Sie kann bei einem kontinuierlichen Herstellungsprozeß der Anolytlösung vor der Abreicherung des Natriumsulfats durch Abkühlung wieder zugesetzt werden.

**Beispiel 14**

Der Versuch nach Beispiel 8 bei 55 °C wurde wiederholt, jedoch wurde die Elektrolyse über 7 h aufrechterhalten. Es wurden 10,0 1 der Anolytlösung mit einer extrem hohen Konzentration an Natriumperoxodisulfat von 576 g/l erhalten (es kam bereits beim Ablassen zur spontanen Auskristallisation). Dies entsprach einer Stromausbeute von immer noch 61,8 %. Die Schwefelsäurekonzentration stieg am Ende der Elektrolyse stark an. Durch Rückführung eines kleinen Teils der kathodisch gebildeten Natronluage wurde der pH-Wert auf 1 bis 1,5 einreguliert. Die mittlere Zellspannung lag bei durchschnittlich 6,2 %. Damit ergibt sich ein spezifischer Gleichstromverbrauch von 2,26 kWh/kg.

Die ersten fünf Liter des abgelassenen Anolyten wurden unter Rühren auf ca. 30 °C abgekühlt und dabei ein Teil des Peroxodisulfats zur Auskristallisation gebracht. Der Kristallbrei wurde abgefrittet und mit einer bei 30 °C an Natriumperoxodisulfat gesättigten Lösung mehrfach gewaschen und wieder zur Trockene abgesaugt. Nach dem Trocknen wurden 880 g Natriumperoxodisulfat mit einem Gehalt von 99,2 % erhalten.

Die zweiten fünf Liter des Anolyten wurden in einem Vakuumverdampfer auf etwa drei Liter eingeengt und auf 30 °C temperiert. Der erhaltene Kristallbrei wurde in gleicher Weise aufgearbeitet wie beim ersten Teilversuch. Es wurden 1510 g Natriumperoxodisulfat mit einem Gehalt von 99,3 % erhalten. Die abgetrennte Mutterlauge enthielt neben 420 g/l Natriumperoxodisulfat noch 137 g/l Natriumsulfat.

**Beispiel 15**

Eine reale Prozeßlösung aus der chemischen Industrie enthielt 96 mg/l AOX insbesondere in Form toxischer chlorierter Phenole vorliegt. Der TOC-Gehalt wurde mit ca. 500 mg/l bestimmt. Außerdem waren etwa 800 mg/l Chloride vorhanden. 10 1 dieses Abwassers wurden mit 1 1 der alkalischen Natriumpersulfatlösung aus dem Beispiel 4 gemischt und bei 80 °C zur Reaktion gebracht. Trotz des Überschusses an Chlorid und an anderen nichttoxischen organischen Verbindungen konnte der AOX-Gehalt innerhalb von 3 Stunden auf 2 mg/l reduziert werden, einer Abbaurate von 98 % entsprechend.

**Beispiel 16**

Eine zur Metallbearbeitung eingesetzte Bohr-Kühl-Emulsion enthielt nach einer Vorbehandlung mittels Ultrafiltration einen TOC-Gehalt von 4,1 g/l (11,2 g/l CSB). 600 ml dieser Prozeßlösung wurden mit 400 ml der alkalischen Natriumperoxodisulfatlösung aus Beispiel 4 vermischt und bei 80 °C über 3 Stunden zur Reaktion gebracht. Der TOC-Gehalt ging auf 1,2 g/l zurück, einer Abbaurate von 70,7 % entsprechend. Der CSB-Gehalt war sogar auf 1,9 g/l gesunken, einer Abbaurate von 83 % entsprechend. Die restliche organische Substanz lag also in einer höher oxidierten, biologisch besser abbaubaren Form vor. Die erhaltene Lösung war annähernd neutral (pH 5,5). Die bei der Peroxodisulfatumsetzung gebildete Schwefelsäure wurde also durch die Natronlauge neutralisiert.

**Beispiel 17**

Das folgende Beispiel veranschaulicht die Bildung einer alkalischen Natriumperoxid-Bleichlösung durch Umsetzung der gebildeten Natronlauge mit kathodisch durch Sauerstoffreduktion erhaltenem Wasserstoffperoxid. Eine Membran-Laborzelle wurde mit getrennten Anolyt-/Katholytkreisläufen betrieben. Die Kathode bestand aus einem Aktivkohlefilz, welcher auf einer vertikal mit Stegen versehenen Graphitplatte aufgeklebt war. Die geometrische Oberfläche der Graphitplatte betrug 150 $cm^2$. Als Anode diente eine Platinfolie auf Titanträgermaterial mit einer Fläche von 50 $cm^2$. Elektrolysiert wurde mit einer Stromstärke von 25 A, einer anodischen Stromdichte von 0,5 $A/cm^2$ entsprechend, während die kathodische Stromdichte lediglich bei 0,17 $A/cm^2$ lag, bezogen auf die Oberfläche der Graphitplatte.

Die Elektrolytkreisläufe wurden mittels Kreiselpumpen mit je ca. 400 l/h umgepumpt. Durch einen Wärmeaustauscher im Katholytkreislauf wurde die Katholyttemperatur auf ca. 30 °C eingestellt, im Anolytkreislauf stellte sich eine Temperatur von ca. 40 °C ein. Die Katholytumwälzung wurde in der Weise gestaltet, daß der Elektrolyt über die Nuten zwischen den Graphitstegen geleitet wurde und durch den Aktivkohlefilz ins Zelleninnere strömte. Vor der Graphitplatte wurde dem Elektrolyten Sauerstoff über eine Fritte zugeführt, um den Katholyten ständig sauerstoffgesättigt zu halten. In diese Sauerstoffzufuhr wurde auch der anodisch gebildete Sauerstoff mit einbezogen.

In den Katholytkreislauf wurde Wasser eindosiert, kontinuierlich liefen ca. 320 ml/h der Katholytlösung mit einer Natriumhydroxidkonzentration von 84,3 g/l und einer Wasserstoffperoxidkonzentration von 31,3 g/l aus dem Katholytkreislauf über, einer Stromausbeute von 63,2 % entsprechend.

Der Anolytkreislauf wurde über ein Lösegefäß mit Natriumsulfat als Bodenkörper geführt. In den Anolytkreislauf wurde ebenfalls Wasser, versetzt mit etwa 0,5 g/l Natriumthiocyanat, eindosiert. Aus dem Anolytkreislauf liefen kontinuierlich ca. 350 ml/h der an Natriumsulfat annähernd gesättigten Anolytlösung über. Diese enthielt durchschnittlich 212 g/l Natriumperoxodisulfat und ca. 7 g/l Schwefelsäure. Die Stromausbeute der peroxodisulfatbildung lag bei 66,8 %.

Durch Vermischen von Anolyt und Katholyt wurden ca. 665 ml/h einer alkalischen Oxidations- und Bleichlösung erhalten mit 110 g/l (0,46 Mol/l) Natriumperoxodisulfat, 15 g/l (0,44 Mol/l) Wasserstoffperoxid und 38 g/l (0,95 Mol/l Natriumhydroxid.

**Patentansprüche**

1. Verfahren zur kombinierten Herstellung von Natriumperoxodisulfat und Natronlauge aus Natriumsulfat,
wobei
eine Elektrolyse in mindestens einer Zweikammerelektrolysezelle mit durch Kationenaustauschermembran getrennten Kathoden- und Anodenräumen durchgeführt, eine Elektrolysetemperatur von 30 bis 70 °C eingestellt, eine bei dieser Temperatur zumindestens 75 % gesättigte Natriumsulfatlösung in den Anodenraum eingeführt und die Natriumionenkonzentration im Bereich von 4,5 bis 6,0 Mol/l aufrechterhalten und aus dem Kathodenraum Natronlauge ausgekreist wird.

**2.** Verfahren nach Anspruch 1,
**dadurch gekennzeichnet,**
daß die Aufrechterhaltung der Natriumionenkonzentration durch Nachlösen von Natriumsulfat oder/und durch Wasserverdampfung erfolgt.

**3.** Verfahren nach Anspruch 1 oder 2,
**dadurch gekennzeichnet**,
daß aus dem Kathodenraum eine 10 bis 40 %-ige Natronlauge, gegebenenfalls durch Zudosierung von Wasser, ausgekreist wird.

**4.** Verfahren nach einem der vorhergehenden Ansprüche,
**dadurch gekennzeichnet**,
daß die Elektrolyse einstufig oder mehrstufig durchgeführt wird.

**5.** Verfahren nach einem der vorhergehenden Ansprüche,
**dadurch gekennzeichnet,**
daß die dem Anodenraum zugeführte Natriumsulfatlösung zu mindestens 90 % gesättigt ist.

**6.** Verfahren nach Anspruch 5,
**dadurch gekennzeichnet,**
daß eine solche Menge von kristallinem Natriumsulfat im Elektrolyten suspendiert wird, wie während der Elektrolyse verbraucht wird, so daß durch Nachlösen stets im Sättigungsbereich gearbeitet wird.

**7.** Verfahren nach Anspruch 1 oder 2,
**dadurch gekennzeichnet,**
daß bei einer mehrstufigen Elektrolyse der Elektrolyt zwischen den Stufen mit kristallinem Natriumsulfat aufgesättigt wird.

**8.** Verfahren nach einem der vorhergehenden Ansprüche,
**dadurch gekennzeichnet,**
daß bei zweistufiger Prozeßführung in der ersten Elektrolysestufe der Anolyt über ein Lösegefäß für Natriumsulfat und die Anodenräume im Kreislauf geführt wird und in diesen stationären Kreislaufelektrolyten Wasser, kristallines Natriumsulfat und gegebenenfalls im Prozeß anfallende, Natriumsulfat und Natriumperoxodisulfat enthaltende Kristallisate bzw. Mutterlaugen eingebracht werden, während der überlaufende, an Natriumsulfat annähernd gesättigte und bis zu 250 g/l Natriumperoxodisulfat enthaltende Anolyt den Anodenräumen der nachgeschalteten Elektrolysestufe zugeführt wird.

**9.** Verfahren nach einem der vorhergehenden Ansprüche,
**dadurch gekennzeichnet,**
daß bei Temperaturen von 40 bis 60 °C elektrolysiert wird.

**10.** Verfahren nach einem der vorhergehenden Ansprüche,
**dadurch gekennzeichnet,**
daß im Anolytkreislauf durch Rückführung eines Teiles der kathodisch gebildeten Natronlauge ein pH-Wert zwischen 0,5 und 2,0 eingestellt wird.

**11.** Verfahren nach einem der vorhergehenden Ansprüche,
**dadurch gekennzeichnet,**
daß in der erhaltenen Natriumperoxodisulfatlösung durch Abkühlung auf 10 bis 25 °C der größte Teil des überschüssigen Natriumsulfats als Glaubersalz zur Auskristallisation gebracht, abgetrennt und dem Elektrolyseprozeß wieder zugeführt wird.

**12.** Verfahren nach einem der vorhergehenden Ansprüche,
**dadurch gekennzeichnet,**
daß zur Herstellung einer annähernd stöchiometrisch zusammengesetzten alkalischen Natriumperoxodisulfatlösung die Anolytlösung direkt oder nach vorheriger Abreicherung an Natriumsulfat mit der Katholytlösung vermischt wird.

13. Verfahren nach einem der vorhergehenden Ansprüche,
**dadurch gekennzeichnet,**
daß zur Herstellung von kristallinem Natriumperoxodisulfat eine bei 40 bis 60 °C erhaltene, an Natriumperoxodisulfat annähernd gesättigte Anolytlösung, gegebenenfalls unter Zusatz von 100 bis 200 g/l festem Natriumsulfat, auf ca. 30 °C abgekühlt wird, das dabei auskristallisierende Natriumperoxodisulfat abgetrennt wird und die Mutterlauge wieder der Elektrolyse zugeführt wird.

14. Verfahren nach einem der Ansprüche 1 bis 12,
**dadurch gekennzeichnet,**
daß zur Herstellung von kristallinem Natriumperoxodisulfat eine bei 40 bis 60 °C erhaltene Natriumperoxodisulfat-Natriumsulfat-Lösung durch Abkühlen auf 15 bis 25 °C von der Hauptmenge des überschüssigen Natriumsulfats befreit wird, danach auf 90 bis 30 % des Ausgangsvolumens eingeengt wird und bei Temperaturen zwischen 25 und 35 °C ein Teil des Natriumperoxodisulfats zur Auskristallisation gebracht und nach bekannten Verfahren aufgearbeitet wird, während die Mutterlauge in den Prozeß nach der Elektrolyse wieder eingebracht wird.

15. Verfahren nach einem der vorhergehenden Ansprüche,
**dadurch gekennzeichnet,**
daß die bei Elektrolysetemperatur entstehende Verlustwärme zur Einengung der Peroxodisulfatlösung genutzt wird.

16. Verfahren nach einem der vorhergehenden Ansprüche,
**dadurch gekennzeichnet**,
daß eine bei 40 bis 60 °C erhaltene Natriumperoxodisulfat-Natriumsulfatlösung durch vollständige Wasserverdampfung, insbesondere durch Zerstäubungstrocknung oder in der Wirbelschicht, zu einem granulierten Oxidations- und Bleichmittel auf Basis von Natriumperoxodisulfat aufgearbeitet wird.

17. Verfahren nach einem der vorhergehenden Ansprüche,
**dadurch gekennzeichnet**,
daß eine bei 40 bis 60 °C erhaltene Natriumperoxodisulfat-Natriumsulfatlösung zur Herstellung eines festen Wirkstoffgemisches auf einen Grundkörper unter Wasserverdampfung aufgesprüht wird.

18. Verfahren nach Anspruch 17,
**dadurch gekennzeichnet**,
daß der Grundkörper in granulierter Form eingesetzt wird.

19. Verfahren nach Anspruch 17 oder 18,
**dadurch gekennzeichnet**,
daß der Grundkörper in einer Wirbelschicht gehalten wird.

20. Verfahren nach einem der Ansprüche 17 bis 19,
**dadurch gekennzeichnet,**
daß der granuliert vorliegende Grundkörper aus Natriumcarbonat besteht.

21. Verfahren nach einem der Ansprüche 17 bis 19,
**dadurch gekennzeichnet,**
daß der granulierte Grundkörper aus Natriumpercarbonat besteht.

22. Verfahren nach einem der vorhergehenden Ansprüche,
**dadurch gekennzeichnet,**
daß die kathodisch gebildete Natronlauge bereits in den Kathodenräumen mit zugesetzten oder kathodisch gebildeten Reaktionspartnern zu Folgeprodukten umgesetzt wird.

23. Verfahren nach Anspruch 22,
**dadurch gekennzeichnet,**
daß die kathodisch gebildete Natronlauge durch Einleiten von Kohlendioxid in den Katholyten zu den Folgeprodukten Natriumcarbonat oder Natriumbicarbonat umgesetzt wird.

24. Verfahren nach Anspruch 22,

**dadurch gekennzeichnet,**
daß durch Zuführung von Sauerstoff und dessen kathodischer Reduktion zu Wasserstoffperoxid mit der gebildeten Natronlauge als Folgeprodukt eine alkalische Natriumperoxid-Bleichlösung gebildet wird.

## Claims

1. Process for the combined production of sodium peroxodisulphate and sodium hydroxide solution from sodium sulphate,
**wherein**
an electrolysis is carried out in at least one two-chamber electrolytic cell with cathode and anode compartments separated by a cation exchange membrane, the electrolysis temperature is adjusted from 30 to 70°C, a sodium sulphate solution at least 75 % saturated at this temperature is introduced into the anode compartment and the sodium ion concentration is maintained in a range from 4.5 to 6.0 mol/l and sodium hydroxide solution is removed from the cathode compartment.

2. Process as claimed in claim 1,
**wherein**
the sodium ion concentration is maintained by subsequent dissolution of sodium sulphate and/or by evaporation of water.

3. Process as claimed in claim 1 or 2,
**wherein**
a 10 to 40 % sodium hydroxide solution is removed from the cathode compartment optionally by addition of water.

4. Process as claimed in one of the previous claims,
**wherein**
the electrolysis is carried out in a single stage or in multiple stages.

5. Process as claimed in one of the previous claims,
**wherein**
the sodium sulphate solution fed to the anode compartment is at least 90 % saturated.

6. Process as claimed in claim 5,
**wherein**
an amount of crystalline sodium sulphate is suspended in the electrolyte which corresponds to that consumed in the course of the electrolysis so that as a result of subsequent dissolution the process is always carried out in the saturation range.

7. Process as claimed in claim 1 or 2,
**wherein**
in the case of a multi-stage electrolysis the electrolyte is saturated with crystalline sodium sulphate between the stages.

8. Process as claimed in one of the previous claims,
**wherein**
in the case of a two-stage process in the first electrolysis stage the anolyte is circulated via a dissolving vessel for sodium sulphate and via the anode compartments and water, crystalline sodium sulphate and optionally crystals or mother liquors which are produced in the process and contain sodium sulphate and sodium peroxodisulphate are introduced into this steady-state circulating electrolyte, while the overflow anolyte which is approximately saturated with sodium sulphate and contains up to 250 g/l of sodium peroxodisulphate is fed to the anode compartments of the subsequent electrolysis stage.

9. Process as claimed in one of the previous claims,
**wherein**
electrolysis is carried out at temperatures of 40 to 60°C.

10. Process as claimed in one of the previous claims,

**wherein**
a pH value between 0.5 and 2.0 is adjusted in the anolyte circulation by returning some of the sodium hydroxide solution formed at the cathode.

**11.** Process as claimed in one of the previous claims,
**wherein**
in the sodium peroxodisulphate solution obtained the majority of excess sodium sulphate is crystallized out as Glauber's salt by cooling to 10 to 25°C separated off and returned to the electrolysis process.

**12.** Process as claimed in one of the previous claims,
**wherein**
in order to produce an alkaline sodium peroxodisulphate solution of approximately stoichiometric composition the anolyte solution is mixed with the catholyte solution directly or after prior depletion of the sodium sulphate.

**13.** Process as claimed in one of the previous claims,
**wherein**
in order to produce crystalline sodium peroxodisulphate an anolyte solution which is approximately saturated with sodium peroxodisulphate and obtained at 40 to 60°C is cooled to approximately 30°C optionally with addition of 100 to 200 g/l solid sodium sulphate, the sodium peroxodisulphate crystallizing out in this process is separated and the mother liquor is returned to the electrolysis.

**14.** Process as claimed in one of claims 1 to 12,
**wherein**
in order to produce crystalline sodium peroxodisulphate, a sodium peroxodisulphate/sodium sulphate solution obtained at 40 to 60°C is freed of the majority of excess sodium sulphate by cooling to 15 to 25°C, then concentrated to 90 to 30 % of the initial volume and some of the sodium peroxodisulphate is crystallized out at temperatures between 25 and 35°C and processed by known processes while the mother liquor is returned to the process after the electrolysis.

**15.** Process as claimed in one of the previous claims,
**wherein**
the heat lost at the electrolysis temperature is used to concentrate the peroxodisulphate solution.

**16.** Process as claimed in one of the previous claims,
**wherein**
a sodium peroxodisulphate/sodium sulphate solution obtained at 40 to 60°C is processed by complete evaporation of water in particular by spray-drying or in a fluidized bed to form a granulated oxidizing and bleaching agent based on sodium peroxodisulphate.

**17.** Process as claimed in one of the previous claims,
**wherein**
a sodium peroxodisulphate/sodium sulphate solution obtained at 40 to 60°C is sprayed onto a base substance with evaporation of water to produce a solid mixture of active substance.

**18.** Process as claimed in claim 17,
**wherein**
the base substance is used in granulated form.

**19.** Process as claimed in claim 17 or 18,
**wherein**
the base substance is kept in a fluidized bed.

**20.** Process as claimed in one of claims 17 to 19,
**wherein**
the base substance present in granulated form is composed of sodium carbonate.

**21.** Process as claimed in one of claims 17 to 19,
**wherein**

the granulated base substance is composed of sodium percarbonate.

22. Process as claimed in one of the previous claims,
**wherein**
the sodium hydroxide solution formed at the cathode is already reacted in the cathode compartments with added reaction partners or reaction partners formed at the cathode to form secondary products.

23. Process as claimed in claim 22,
**wherein**
the sodium hydroxide solution formed at the cathode is reacted to form the secondary products sodium carbonate or sodium bicarbonate by introducing carbon dioxide into the catholyte.

24. Process as claimed in claim 22,
**wherein**
an alkaline sodium peroxide bleaching solution is formed as a secondary product by adding oxygen and cathodically reducing it to hydrogen peroxide with the sodium hydroxide solution formed.

**Revendications**

1. Procédé de production combinée de peroxodisulfate de sodium et de soude caustique à partir de sulfate de sodium, dans lequel une électrolyse est réalisée dans au moins une cellule d'électrolyse à deux chambres avec des compartiments cathodiques et anodiques séparés par une membrane échangeuse de cations, une température d'électrolyse de 30 à 70°C est fixée, une solution de sulfate de sodium saturée à au moins 75% à cette température est introduite dans le compartiment anodique et la concentration des ions sodium est maintenue dans le domaine de 4,5 à 6,0 mol/l et la soude caustique est retirée du circuit au niveau du compartiment cathodique.

2. Procédé selon la revendication 1 caractérisé en ce que le maintien de la concentration des ions sodium a lieu par post-dissolution de sulfate de sodium et/ou par évaporation d'eau.

3. Procédé selon la revendication 1 ou 2 caractérisé en ce qu'une soude caustique à 10 à 40% est retirée du circuit au niveau du compartiment cathodique, éventuellement par addition d'eau.

4. Procédé selon l'une des revendications précédentes caractérisé en ce que l'électrolyse est réalisée en une étape ou en plusieurs étapes.

5. Procédé selon l'une des revendications précédentes caractérisé en ce que la solution de sulfate de sodium introduite dans le compartiment anodique est saturée à au moins 90%.

6. Procédé selon la revendication 5 caractérisé en ce que l'on met en suspension dans l'électrolyte une quantité de sulfate de sodium cristallisé égale à celle qui est consommée pendant l'électrolyse de sorte que l'on opère toujours dans le domaine de saturation par post-dissolution.

7. Procédé selon la revendication 1 ou 2 caractérisé en ce que, dans le cas d'une électrolyse en plusieurs étapes, l'électrolyte est saturé de sulfate de sodium cristallisé entre les étapes.

8. Procédé selon l'une des revendications précédentes caractérisé en ce que, dans le cas d'une conduite de procédé en deux étapes, dans la première étape d'électrolyse l'anolyte est mis en circulation par le biais d'un récipient de dissolution pour le sulfate de sodium et des compartiments anodiques et, dans cet électrolyte en circulation stationnaire on introduit de l'eau, du sulfate de sodium cristallisé et éventuellement des produits de cristallisation ou des liqueurs mères formés dans le procédé, qui contiennent du sulfate de sodium et du peroxodisulfate de sodium, tandis que l'anolyte débordant, sensiblement saturé en sulfate de sodium et contenant jusqu'à 250 g/l de peroxodisulfate de sodium est introduit dans les compartiments anodiques de l'étape d'électrolyse subséquente.

9. Procédé selon l'une des revendications précédentes caractérisé en ce que l'on électrolyse à des températures de 40 à 60°C.

10. Procédé selon l'une des revendications précédentes caractérisé en ce qu'un pH compris entre 0,5 et 2,0 est ajusté

dans le circuit d'anolyte par recyclage d'une partie de la soude caustique formée cathodiquement.

**11.** Procédé selon l'une des revendications précédentes caractérisé en ce que, dans la solution de peroxodisulfate de sodium obtenue, la majeure partie du sulfate de sodium en excès est amenée à cristalliser sous forme de sel de Glauber par refroidissement à 10 à 25°C, séparée et réintroduite dans le processus d'électrolyse.

**12.** Procédé selon l'une des revendications précédentes caractérisé en ce que, pour la production d'une solution de peroxodisulfate de sodium alcaline de composition sensiblement stoechiométrique, la solution d'anolyte est mélangée avec la solution de catholyte directement ou après appauvrissement préalable en sulfate de sodium.

**13.** Procédé selon l'une des revendications précédentes caractérisé en ce que, pour la production de peroxodisulfate de sodium cristallisé, une solution d'anolyte obtenue entre 40 et 60°C, sensiblement saturée en peroxodisulfate de sodium, est refroidie à environ 30°C, éventuellement avec addition de 100 à 200 g/l de sulfate de sodium solide, le peroxodisulfate de sodium qui cristallise alors est séparé et la liqueur mère est renvoyée à l'électrolyse.

**14.** Procédé selon l'une des revendications 1 à 12 caractérisé en ce que, pour la production de peroxodisulfate de sodium cristallisé, une solution de peroxodisulfate de sodium-sulfate de sodium obtenue entre 40 et 60°C est débarrassée de la majeure partie du sulfate de sodium en excès par refroidissement à 15 à 25°C, puis est concentrée à 90 à 30% du volume initial et, à des températures de 25 à 35°C, une partie du peroxodisulfate de sodium est amenée à cristalliser et est traitée selon des procédés connus, tandis que la liqueur mère est réintroduite dans le processus après l'électrolyse.

**15.** Procédé selon l'une des revendications précédentes caractérisé en ce que la chaleur perdue apparue à la température de l'électrolyse est utilisée pour la concentration de la solution de peroxodisulfate de sodium.

**16.** Procédé selon l'une des revendications précédentes caractérisé en ce qu'une solution de peroxodisulfate de sodium-sulfate de sodium obtenue entre 40 et 60°C est transformée en un agent oxydant et de blanchiment granulé à base de peroxodisulfate de sodium par évaporation totale de l'eau, en particulier par séchage par pulvérisation ou en couche fluidisée.

**17.** Procédé selon l'une des revendications précédentes caractérisé en ce qu'une solution de peroxodisulfate de sodium-sulfate de sodium obtenue entre 40 et 60°C est pulvérisée sur un corps de base avec évaporation d'eau pour la production d'un mélange solide de principes actifs.

**18.** Procédé selon la revendication 17 caractérisé en ce que le corps de base est utilisé sous forme granulée.

**19.** Procédé selon la revendication 17 ou 18 caractérisé en ce que le corps de base est maintenu dans une couche fluidisée.

**20.** Procédé selon l'une des revendications 17 à 19 caractérisé en ce que le corps de base présent sous forme granulée consiste en carbonate de sodium.

**21.** Procédé selon l'une des revendications 17 à 19 caractérisé en ce que le corps de base granulé consiste en percarbonate de sodium.

**22.** Procédé selon l'une des revendications précédentes caractérisé en ce que la soude caustique formée cathodiquement est déjà convertie en dérivés dans les compartiments cathodiques avec des partenaires réactionnels ajoutés ou formés cathodiquement.

**23.** Procédé selon la revendication 22 caractérisé en ce que la soude caustique formée cathodiquement est convertie en les dérivés carbonate de sodium ou bicarbonate de sodium par introduction de dioxyde de carbone dans les catholytes.

**24.** Procédé selon la revendication 22 caractérisé en ce qu'une solution alcaline de blanchiment de peroxyde de sodium est formée comme dérivé par introduction d'oxygène et par sa réduction cathodique en peroxyde d'hydrogène avec la soude caustique formée.

# Fig. 1